# EUROPÄISCHE PATENTSCHRIFT

(11) **EP 3 481 703 B1**
(45) Veröffentlichungstag und Bekanntmachung des Hinweises auf die Patenterteilung: **19.08.2020**
(21) Anmeldenummer: 17734737.4
(22) Anmeldetag: 03.07.2017
(51) Int. Cl.: B62D 6/00

(54) **STEER-BY-WIRE-LENKSYSTEM MIT UNTERSCHIEDLICHER DÄMPFUNG BEI KURVENEINFAHRT UND -AUSFAHRT**
STEER-BY-WIRE STEERING SYSTEM HAVING DIFFERENT DAMPING AS A TURN IS ENTERED AND EXITED
SYSTÈME DE DIRECTION "STEER-BY-WIRE" AVEC ATTÉNUATION DIFFÉRENTE EN FONCTION DE L'ENTRÉE EN MODE VIRAGE ET DE LA SORTIE DU MODE VIRAGE

(30) Priorität: 05.07.2016 DE 102016008094
(43) Veröffentlichungstag der Anmeldung: 15.05.2019
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT)
(74) Vertreter: thyssenkrupp Intellectual Property GmbH
(86) Internationale Anmeldenummer: PCT/EP2017/066504
(87) Internationale Veröffentlichungsnummer: WO 2018/007319

(56) Entgegenhaltungen:
- EP-A1- 1 710 148
- WO-A1-2013/093584
- DE-A1- 10 260 752
- DE-A1- 19 836 679
- US-A1- 2009 024 281

## Beschreibung

Die vorliegende Erfindung betrifft ein Steer-by-Wire-Lenksystem für Kraftfahrzeuge mit den Merkmalen des Oberbegriffs des Anspruchs 1 und ein Verfahren zur Steuerung eines Steer-by-Wire-Lenksystems mit den Merkmalen des Oberbegriffs des Anspruchs 2.

Bei Steer-by-Wire-Lenksystemen ist die Stellung der gelenkten Räder nicht direkt mit dem Lenkrad gekoppelt. Es besteht eine Verbindung zwischen dem Lenkrad und den gelenkten Rädern über elektrische Signale. Der Fahrerlenkwunsch wird von einem Lenkwinkelsensor abgegriffen und in Abhängigkeit des Fahrerlenkwunsches wird über einen Lenksteller die Stellung der gelenkten Räder geregelt. Eine mechanische Verbindung zu den Rädern ist nicht vorgesehen, sodass nach Betätigung des Lenkrads eine Kraft-Rückmeldung fehlt, z. B. eine entsprechende Rückmeldung beim Einparken, wo aus Komfortgründen ein geringer Kraftaufwand gewünscht ist, oder bei einer üblichen Geradeausfahrt, bei der ein der Fahrzeugreaktion entsprechendes höheres Lenkmoment gewünscht ist. Um bei Steer-by-Wire-Lenkungen die Rückmeldungen der Straße auf das Lenkrad zu simulieren, ist es notwendig am Lenkrad bzw. der Lenksäule einen Feedback-Aktuator (FBA) vorzusehen, welcher in Abhängigkeit von den Rückwirkungen der Lenkhandhabe ein Lenkgefühl aufprägt. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt dadurch ein gedämpftes Lenkgefühl. Zusätzlich stellt diese Funktion sicher, dass das Lenkrad beim Loslassen gedämpft und ohne Oszillationen in die Mittenposition zurückgeführt wird. Dabei unterscheidet der FBA nach dem Stand der Technik nicht, ob das Kraftfahrzeug in die Kurve hineinfährt oder aus dieser hinausfährt. Die Dämpfung ist konstant. Diese Unterscheidung ist jedoch unter dem Aspekt der Ansteuerung des FBA wichtig, weil unterschiedliche Lenkgefühle vom Fahrer erwartet werden und um das für den Fahrer und ein Fahrzeug verbesserte Systemverhalten darstellen zu können.

Aus DE 198 36 679 A1 ist eine Steer-by-Wire Fahrzeuglenkung bekannt, bei der die relativen Verstellbewegungen zwischen Lenkhandhabe und Handkraftsteller mit Hilfe entsprechend angeordneter Dämpfermittel gedämpft werden, um Torsionsschwingungen der Lenkhandhabe, die auch ungewünschte Lenkwinkelschwingungen auslösen können, wenn der Fahrer das Lenkhandrad in einem Lenkzustand loslässt, zu vermindern. Um als elektrischer Dämpfer arbeiten zu können, kann das Dämpferelement beispielsweise als Wirbelstrombremse ausgebildet sein.

WO 2013/093584 A1 beschreibt eine Kraftfahrzeugservolenkung mit einer Einstelleinheit, die eine Sollrückstellkraft einstellt, so dass sich die Sollrückstellkraft abhängig davon ändert, ob ein Lenkmodus des Einlenkens oder des Auslenkens vorliegt. Eine Motorsteuerung treibt den Servomotor an durch Umwandeln eines Drehmoments in ein Antriebssignal, das der Differenz zwischen der Sollrückstellkraft und dem momentanen Lenkdrehmoment entspricht.

US 2009/0024281 A1 beschreibt ein Steer-by-Wire Lenksystem für ein Kraftfahrzeug, bei dem eine zentrale Steuereinheit eine Lenkreaktionskraft und eine Rückstellkraft, die in die dem Lenkmoment des Fahrers entgegengesetzte Richtung wirken, sowie eine Dämpfungskraft erzeugt, die der Lenkreaktionskraft und der Rückstellkraft entgegenwirkt, und ein Gesamtstromsteuersignal, das durch Kombination der erzeugten Kräfte erzeugt wird, an einen das Lenkgefühl generierenden Motor anlegt.

Es ist Aufgabe der vorliegenden Erfindung, ein Steer-by-Wire-Lenksystem für Kraftfahrzeuge anzugeben, das einen Feedback-Aktuator aufweist, der bei Kurvenfahrt ein verbessertes Lenkgefühl bereitstellt.

Diese Aufgabe wird von einem Steer-by-Wire Lenksystem mit den Merkmalen des Anspruchs 1 und einem Verfahren zur Steuerung eines Steer-by-Wire Lenksystems mit den Merkmalen des Anspruchs 2 gelöst. Weitere vorteilhafte Ausbildungen der Erfindung sind den Unteransprüchen zu entnehmen.

Demnach wird ein Steer-by-Wire-Lenksystem für Kraftfahrzeuge mit einem auf die gelenkten Räder wirkenden, in Abhängigkeit von einem Fahrerlenkwunsch elektronisch geregelten Lenksteller, der mittels eines Zahnstangen-Lenkgetriebes auf die gelenkten Räder wirkt, mit einem Rückwirkungen der Straße auf ein Lenkrad übertragenden Feedback-Aktuator, vorgesehen, wobei das Steer-by-Wire-Lenksystem eine Auswerteeinheit aufweist, die analysiert, ob ein Kurvenfahrzustand vorliegt, und eine Dämpfungseinrichtung aufweist, wobei die Dämpfungseinrichtung derart ausgestaltet ist, das Signal der Auswerteeinheit zu empfangen und in Abhängigkeit davon, ob eine Kurveneinfahrt oder Kurvenausfahrt vorliegt, ein Dämpfungssignal zu erzeugen, das ein am Lenkrad anliegendes Drehmoment dämpft.

Der Feedback-Aktuator kann somit auch bei Kurvenfahrt ein verbessertes Lenkgefühl bereitstellen, weil beim Hineinfahren in eine Kurve ein möglichst wenig gedämpftes Lenkgefühl wünschenswert ist, sodass der Fahrer das Gefühl hat, selbstständig zu lenken. Im Gegensatz hierzu erwartet der Fahrer beim Hinausfahren aus der Kurve eine stärkere Dämpfung, welche ihm einen verbesserten Rücklauf des Lenkrads mit geringen Oszillationen und das Auffinden der Mittenposition für die anschließende Geradeausfahrt ermöglicht.

Es ist vorgesehen, dass der Feedback-Aktuator neben einem Elektromotor ein Dämpfungselement aufweist, das von der Dämpfungseinrichtung mit dem Dämpfungssignal ansteuerbar ist.

Weiterhin ist ein Verfahren zur Steuerung eines Steer-by-Wire-Lenksystems für Kraftfahrzeuge mit folgenden Verfahrensschritte vorgesehen:
- Messen eines am Lenkrad aufgeprägten Lenkwinkels und einer Lenkgeschwindigkeit während der Fahrt des Kraftfahrzeuges und Übermitteln der Signale an eine Auswerteeinheit;
- Feststellen durch die Auswerteeinheit, ob eine Kurvenfahrt vorliegt und ob der Zustand eine Kurveneinfahrt oder Kurvenausfahrt ist;
- Übermitteln des Kurvenfahrtzustandes an eine Dämpfungseinrichtung;
- Festlegen einer Dämpfung in Abhängigkeit des Kurvenfahrtzustandes mittels der Dämpfungseinrichtung;
- Im Fall einer Kurvenausfahrt, verstärktes Dämpfen des am Lenkrad anliegenden Drehmomentes mittels der von der Dämpfungseinrichtung festgelegten Dämpfung.

Das verstärkte Dämpfen bei Kurvenausfahrt erfolgt in Abhängigkeit der Fahrzeuggeschwindigkeit und/oder der Lenkwinkel-geschwindigkeit und/oder dem Lenkwinkel und/oder des am Lenkrad anliegenden Drehmoments und/oder des Lenkraddrehmoments.

Es kann weiterhin vorteilhaft sein, wenn im Fall einer Kurveneinfahrt, ein Dämpfen des am Lenkrad anliegenden Drehmomentes mit einem Wert, der geringer ist als ein Wert bei dem Fall der Kurvenausfahrt erfolgt.

Es ist bevorzugt, dass im Fall einer Kurveneinfahrt die Dämpfung konstant ist.

Wie bereits oben erwähnt, erfolgt die Dämpfung über ein Dämpfungselement des Feedback-Aktuators. Dabei erzeugt das Dämpfungselement zur Dämpfung des Drehmomentes am Lenkrad Reibung.

In einer weiteren Ausführungsform ist zusätzlich vorgesehen, dass der winkelabhängige Verlauf des an dem Lenkrad anliegenden Drehmoments eine Unstetigkeit in der Mittenposition aufweist. Das Erreichen der Mittenposition des Lenkrades kann aber auch durch ein elektrisch oder elektronisch erzeugtes Signal dem Fahrer vermittelt werden.

Auch wenn hier im Beispiel ein Steer-by-Wire Lenksystem dargestellt ist, kann die Erfindung auch für eine elektromechanische Servolenkung mit mechanischer Kopplung zwischen Lenkrad und den elektronisch geregeltem Lenkgetriebe angewendet werden. Dabei weist die Servolenkung eine Auswerteeinheit auf, welche einen Kurvenfahrzustand analysiert und in Abhängigkeit davon ein am Lenkrad vorliegendes Drehmoment dämpft.

Bevorzugte Ausführungsformen der Erfindung werden nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: eine Darstellung des Verlaufs der Dämpfung mittels Hysteresekurve, sowie
- Fig. 3:: eine Darstellung des Verlaufs der Dämpfung mit Unstetigkeit in der Mittenposition.

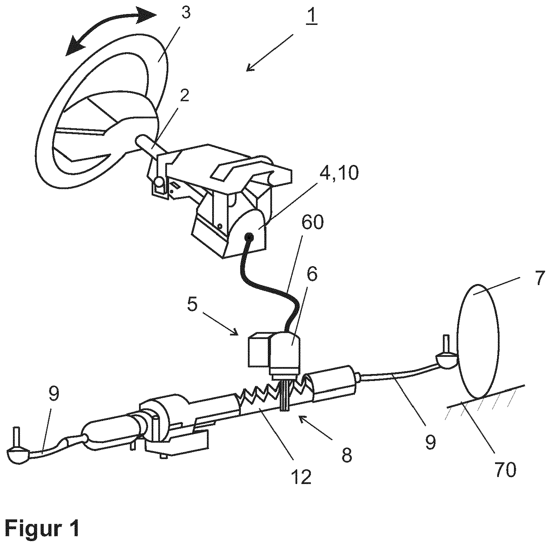

In der Figur 1 ist eine Steer-by-Wire-Lenkung 1 gezeigt. An einer Lenkwelle 2 ist ein nicht dargestellter Drehwinkel- und Drehmomentsensor angebracht, welcher das durch Drehen des Lenkrads 3 aufgebrachte Fahrerlenkmoment erfasst. Des Weiteren ist an der Lenkwelle 2 ein Feedback-Aktuator 4 angebracht, welcher dazu dient, die Rückwirkungen von der Fahrbahn 70 auf das Lenkrad 3 zu übertragen und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen 60 an eine Steuereinheit 5 übertragen. Die Steuereinheit 5 steuert in Abhängigkeit von dem Signal des Drehwinkelsensors sowie von weiteren Eingangsgrößen, wie z. B. Fahrzeuggeschwindigkeit, Gierrate und dergleichen einen elektrischen Lenksteller 6 an, welcher die Stellung der gelenkten Räder 7 steuert. Der Lenksteller 6 wirkt über ein Zahnstangen-Lenkgetriebe 8 sowie Spurstangen 9 und anderen Bauteilen mittelbar auf die gelenkten Räder 7. Der Feedback-Aktuator 4 weist einen von der Steuereinheit 5 angesteuerten Elektromotor 10 auf.

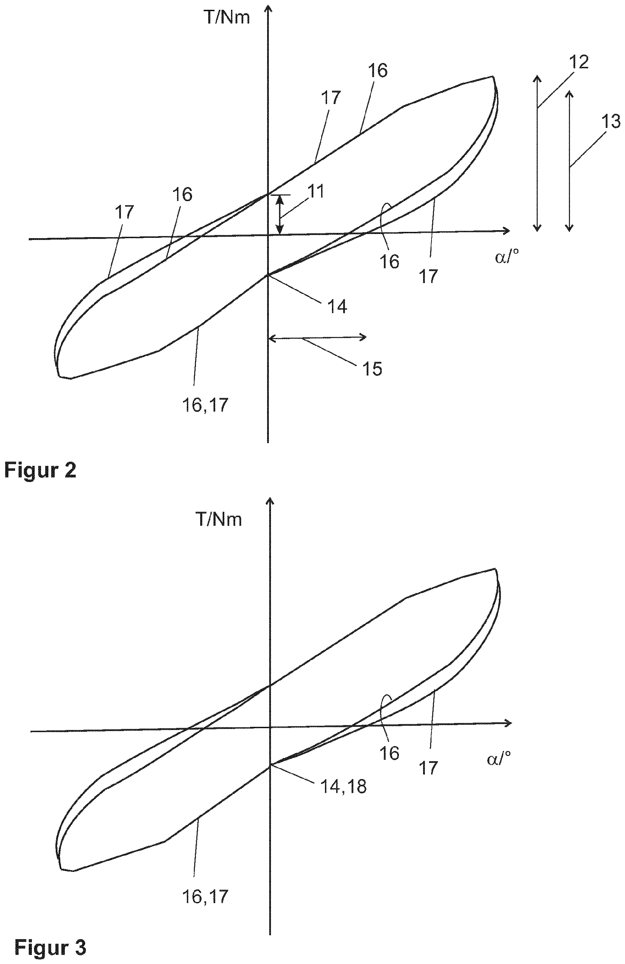

Figur 2 zeigt einen Hystereseverlauf des vom Feedback-Aktuator 4 vorgegebenen Lenkdrehmoments über dem Lenkraddrehwinkel. Beim Anlenken (Lenkradwinkel= 0°) muss vom Fahrer ein Anlenkdrehmoment 11 aufgebracht werden. Das größte Drehmoment 12 ist das Moment, das sich beim maximalen Lenkradeinschlag beim Fahren ergibt. Lenkt der Fahrer aus dem maximalen Lenkradwinkel zurück, muss er das maximale Haltedrehmoment 13 aufbringen. Die Lenkung würde bei einem Loslassen des Lenkrades selbsttätig bis auf ein Lenkdrehmoment von null zurücklaufen. Dabei kann vorgesehen sein, dass das Lenkrad bis zur Mittenstellung 14 oder bis zu einem verbleibenden Restwinkel 15, wie hier dargestellt, zurückläuft.

Das Lenkgefühl wird erfindungsgemäß dadurch optimiert, dass in Abhängigkeit von einer Kurveneinfahrt bzw. Kurvenausfahrt eine unterschiedliche Dämpfung des Lenkdrehmomentes aufgeprägt wird.

Als Erstes wird über einen Vergleich der Vorzeichen des gemessenen Lenkwinkels und der gemessenen Lenkgeschwindigkeit der Kurvenfahrzustand bestimmt und zwischen Kurveneinfahrt und Kurvenausfahrt unterschieden. Die Dämpfung wird daraufhin an den Kurvenfahrzustand angepasst.

In den Figuren 2 und 3 ist die Dämpfung mittels Reibung anhand von Hysteresekurven 16, 17 dargestellt.

Eine erste Hysteresekurve 16 zeigt einen Verlauf mit konstanter Dämpfung. Eine zweite Hysteresekurve 17 zeigt die erfindungsgemäße Anpassung der Dämpfung; Beim Hineinfahren in eine Kurve liegt eine konstante Dämpfung vor, mit der das Lenkrad bei einem Loslassen anschließend zurückgedreht wird. Beim Hinausfahren aus der Kurve wird hingegen stärker gedämpft. Der Rücklauf in die Geradeausposition bei einer Kurvenausfahrt verläuft durch die höhere Reibung gegenüber einem Einlenken bei einer Kurveneinfahrt verlangsamt.

Die jeweils erforderliche Dämpfung wird über eine Reibung bereitgestellt, welche in Abhängigkeit von der Fahrzeuggeschwindigkeit und/oder der Lenkwinkelgeschwindigkeit und/oder dem Lenkwinkel und/oder des am Lenkrad anliegenden Drehmoments bestimmt wird.

Die Dämpfung kann auch über den Feedback-Aktuator 4 eingestellt werden.

In einer bevorzugten Ausführungsform weist das Steer-by-Wire-Lenksystem 1 eine Auswerteeinheit auf, die entscheidet ob ein Kurvenfahrzustand vorliegt. Wurde ein Kurvenfahrzustand ermittelt, bestimmt die Auswerteeinheit, ob eine Kurveneinfahrt oder Kurvenausfahrt vorliegt. Weiterhin ist eine Dämpfungseinrichtung vorgesehen, die ein Signal von der Auswerteeinheit empfängt und in Abhängigkeit des Signals ein Dämpfungssignal erzeugt. Dieses Dämpfungssignal wird an die Steuereinheit 5 weitergegeben, die wiederum mit einer entsprechenden Dämpfung den Elektromotor 10 des Feedback-Aktuators 4 ansteuert. Es ist zusätzlich zum Elektromotor 10 auch ein Dämpfungs-element vorgesehen, das ein Rückstellmoment auf das Lenkrad überträgt. Dabei ist das Dämpfungselement entsprechend dem Dämpfungssignal der Dämpfungseinrichtung einstellbar. Beispiels-weise kann die Dämpfungseinrichtung eine Dämpfungsspule oder ein Element mit einer magnetorheologischen Flüssigkeit sein, die platzsparend und kosten-günstig in den Elektromotor integrierbar sind.

In der Figur 3 zeigen die Hysteresekurven 16, 17 eine Unstetigkeit 18 bei der Mittenposition 14. In dieser Ausführungsform ist das Erreichen der Geradeausstellung 14 des Lenkrads 3 durch die Unstetigkeit im Verlauf des Lenkdrehmoments über dem Lenkraddrehwinkel für den Fahrer deutlich spürbar. Es kann auch vorgesehen sein, das Erreichen der Mittenposition dem Fahrer durch eine elektrisch erzeugte Vibration des Lenkrades oder ein elektronisch erzeugtes Geräusch zu signalisieren.

Das erfindungsgemäße Steer-by-Wire Lenksystem stellt durch eine adaptive Dämpfung des Drehmoments am Lenkrad auch bei Kurvenfahrt ein verbessertes Lenkgefühl bereit.

## Patentansprüche

1. Steer-by-Wire-Lenksystem (1) für Kraftfahrzeuge mit einem auf die gelenkten Räder (7) wirkenden, in Abhängigkeit von einem Fahrerlenkwunsch elektronisch geregelten Lenksteller (6), der mittels eines Zahnstangen-Lenkgetriebes (8) auf die gelenkten Räder (7) wirkt, mit einem Rückwirkungen der Straße auf ein Lenkrad (3) übertragenden Feedback-Aktuator (4) und mit einer Dämpfungseinrichtung, die ausgestaltet ist, ein Signal einer Auswerteeinheit zu empfangen und ein Dämpfungssignal zu erzeugen, das ein am Lenkrad (3) anliegendes Drehmoment dämpft, wobei der Feedback-Aktuator (4) neben einem Elektromotor (10) ein Dämpfungselement aufweist, das von der Dämpfungseinrichtung mit dem Dämpfungssignal ansteuerbar ist, **dadurch gekennzeichnet, dass** die Auswerteeinheit analysiert, ob ein Kurvenfahrzustand vorliegt, und die Dämpfungseinrichtung ausgestaltet ist, das Dämpfungssignal in Abhängigkeit davon zu erzeugen, ob eine Kurveneinfahrt oder Kurvenausfahrt vorliegt, wobei die jeweils erforderliche Dämpfung über eine Reibung bereitstellbar ist, welche in Abhängigkeit von der Fahrzeuggeschwindigkeit und/oder der Lenkwinkelgeschwindigkeit und/oder dem Lenkwinkel und/oder des am Lenkrad anliegenden Drehmoments bestimmt wird.

2. Verfahren zur Steuerung eines Steer-by-Wire-Lenksystems für Kraftfahrzeuge, wobei das Steer-by-Wire-Lenksystem (1) einen auf die gelenkten Räder (7) wirkenden, in Abhängigkeit von einem Fahrerlenkwunsch elektronisch geregelten Lenksteller (6) und einen Feedback-Aktuator (4), der Rückwirkungen der Straße auf ein Lenkrad (3) überträgt, aufweist, wobei folgende Verfahrensschritte vorgesehen sind:
• Messen eines am Lenkrad aufgeprägten Lenkwinkels und einer Lenkgeschwindigkeit während der Fahrt des Kraftfahrzeuges und Übermitteln der Signale an eine Auswerteeinheit;
• Feststellen durch die Auswerteeinheit, ob eine Kurvenfahrt vorliegt und ob der Zustand eine Kurveneinfahrt oder Kurvenausfahrt ist;
• Übermitteln des Kurvenfahrtzustandes an eine Dämpfungseinrichtung;
• Festlegen einer Dämpfung in Abhängigkeit des Kurvenfahrtzustandes mittels der Dämpfungseinrichtung;
• Im Fall einer Kurvenausfahrt, verstärktes Dämpfen des am Lenkrad anliegenden Drehmomentes mittels der von der Dämpfungseinrichtung festgelegten Dämpfung,
wobei die Dämpfungseinrichtung ein Dämpfungselement des Feedback-Aktuators (4) ansteuert, das in Abhängigkeit von dem Dämpfungssignal ein an dem Lenkrad (3) anliegendes Drehmoment dämpft und die jeweils erforderliche Dämpfung über eine Reibung bereitgestellt wird, welche in Abhängigkeit von der Fahrzeuggeschwindigkeit und/oder der Lenkwinkelgeschwindigkeit und/oder dem Lenkwinkel und/oder eines am Lenkrad anliegenden Drehmoments bestimmt wird.

3. Verfahren nach Anspruch 2, **dadurch gekennzeichnet, dass** folgender Verfahrensschritt vorgesehen ist:
• Im Fall einer Kurveneinfahrt, Dämpfen des am Lenkrad anliegenden Drehmomentes mit einem Wert, der geringer ist als ein Wert bei dem Fall der Kurvenausfahrt.

4. Verfahren nach Anspruch 3, **dadurch gekennzeichnet, dass** im Fall einer Kurveneinfahrt die Dämpfung konstant ist.

5. Verfahren nach einem der Ansprüche 2 bis 4, **dadurch gekennzeichnet, dass** der winkelabhängige Verlauf des an dem Lenkrad (3) anliegenden Drehmoments eine Unstetigkeit (18) in der Mittenposition (14) aufweist.

6. Verfahren nach einem der Ansprüche 2 bis 4, **dadurch gekennzeichnet, dass** das Erreichen der Mittenposition (14) des Lenkrades (3) dem Fahrer durch ein elektrisch oder elektronisch erzeugtes Signal vermittelt wird.

## Claims

1. Steer-by-wire steering system (1) for motor vehicles, having a steering actuator (6), which acts on the steered wheels (7), and is electronically closed-loop controlled as a function of a driver's steering request and acts on the steered wheels (7) by means of a toothed-rack steering gear (8), having a feedback actuator (4) which transmits reactions of the road to a steering wheel (3), and having a damping device which is configured to receive a signal of an evaluation unit and to generate a damping signal which damps a torque which is present at the steering wheel (3), wherein the feedback actuator (4) has, in addition to an electric motor (10), a damping element which can be actuated by the damping device with the damping signal,
**characterized in that** the evaluation unit analyses whether a cornering state is present, and the damping device is configured to generate a damping signal depending on whether driving into a corner or driving out of a corner is occurring, wherein the respectively necessary damping can be made available by means of friction which is determined in accordance with the speed of the vehicle and/or the steering angle speed and/or the steering angle and/or the torque which is present at the steering wheel.

2. Method for controlling a steer-by-wire steering system for motor vehicles, wherein the steer-by-wire steering system (1) has a steering actuator (6) which acts on the steered wheels (7) and is electronically closed-loop controlled as a function of a driver's steering request, and a feedback actuator (4) which transmits reactions of the road to a steering wheel (3), wherein the following method steps are provided:
• measuring a steering angle which is applied at the steering wheel, and a steering speed while the motor vehicle is travelling, and transferring the signal to an evaluation unit;
• detecting, by means of the evaluation unit, whether cornering is occurring and whether the state is driving into a corner or driving out of a corner;
• transferring the cornering state to a damping device;
• specifying damping as a function of the cornering state by means of the damping device;
• in the case of driving out of a corner, increased damping of the torque which is present at the steering wheel, by means of the damping which is specified by the damping device,
wherein the damping device actuates a damping element of the feedback actuator (4) which damps, in accordance with the damping signal, a torque which is present at the steering wheel (3), and the respectively necessary damping is made available by means of friction which is determined in accordance with the vehicle speed and/or the steering angle speed and/or the steering angle and/or a torque which is present at the steering wheel.

3. Method according to Claim 2, **characterized in that** the following method step is provided:
• in the case of driving into a corner, damping of the torque which is present at the steering wheel, with a value which is lower than a value in the case of driving out of a corner.

4. Method according to Claim 3, **characterized in that** in the case of driving into a corner the damping is constant.

5. Method according to one of Claims 2 to 4, **characterized in that** the angle-dependent profile of the torque which is present at the steering wheel (3) has a discontinuity (18) in the central position (14) .

6. Method according to one of Claims 2 to 4, **characterized in that** the arrival of the steering wheel (3) at the central position (14) is communicated to the driver by means of an electrically or electronically generated signal.

## Revendications

1. Système de direction à commande filaire (1) pour véhicules automobiles, comprenant un organe de réglage de direction (6) qui agit sur les roues directrices (7) et est régulé électroniquement en fonction d'un souhait de direction du conducteur et qui agit sur les roues directrices (7) au moyen d'un mécanisme de direction à crémaillère (8), comprenant un actionneur de rétroaction (4) qui transmet les réactions de la route à un volant de direction (3) et comprenant un dispositif d'atténuation qui est configuré pour recevoir un signal d'une unité d'interprétation et générer un signal d'atténuation, lequel atténue un couple appliqué au volant de direction (3), l'actionneur de rétroaction (4) possédant, en plus d'un moteur électrique (10), un élément d'atténuation qui peut être commandé par le dispositif d'atténuation avec le signal d'atténuation, **caractérisé en ce que** l'unité d'interprétation analyse s'il y a présence d'un état de déplacement en virage et le dispositif d'atténuation est configuré pour générer le signal d'atténuation en fonction de la présence d'une entrée en virage ou d'une sortie de virage, l'atténuation respectivement nécessaire pouvant être fournie par le biais d'une friction qui est déterminée en fonction de la vitesse du véhicule et/ou de la vitesse angulaire de direction et/ou de l'angle de braquage et/ou du couple appliqué au volant de direction.

2. Procédé de commande d'un système de direction à commande filaire pour véhicules automobiles, le système de direction à commande filaire (1) possédant un organe de réglage de direction (6) qui agit sur les roues directrices (7) et est régulé électroniquement en fonction d'un souhait de direction du conducteur et un actionneur de rétroaction (4) qui transmet les réactions de la route à un volant de direction (3), les étapes de procédé suivantes étant prévues :
* mesure d'un angle de braquage imposé au volant de direction et d'une vitesse de direction pendant le déplacement du véhicule automobile et communication des signaux à une unité d'interprétation ;
* constatation, par l'unité d'interprétation, de la présence ou non d'un déplacement en virage et si l'état est une entrée en virage ou une sortie de virage ;
* communication de l'état de déplacement en virage à un dispositif d'atténuation ;
* spécification d'une atténuation en fonction de l'état de déplacement en virage au moyen du dispositif d'atténuation ;
* dans le cas d'une sortie de virage, atténuation renforcée du couple appliqué au volant de direction au moyen de l'atténuation spécifiée par le dispositif d'atténuation,
le dispositif d'atténuation commandant un élément d'atténuation de l'actionneur de rétroaction (4) qui atténue un couple appliqué au volant de direction (3) en fonction du signal d'atténuation et l'atténuation respectivement nécessaire étant fournie par le biais d'une friction qui est déterminée en fonction de la vitesse du véhicule et/ou de la vitesse angulaire de direction et/ou de l'angle de braquage et/ou d'un couple appliqué au volant de direction.

3. Procédé selon la revendication 2, **caractérisé en ce que** l'étape de procédé suivante est prévue :
* dans le cas d'une entrée en virage, atténuation du couple appliqué au volant de direction avec une valeur qui est inférieure à une valeur dans le cas d'une sortie de virage.

4. Procédé selon la revendication 3, **caractérisé en ce que** dans le cas d'une entrée en virage, l'atténuation est constante.

5. Procédé selon l'une des revendications 2 à 4, **caractérisé en ce que** le tracé dépendant de l'angle du couple appliqué au volant de direction (3) présente une discontinuité (18) en position centrale (14).

6. Procédé selon l'une des revendications 2 à 4, **caractérisé en ce que** le fait d'atteindre la position centrale (14) du volant de direction (3) est communiqué au conducteur par un signal généré de manière électrique ou électronique.
